# EUROPEAN PATENT SPECIFICATION

(11) **EP 0 868 963 B1**
(45) Date of publication and mention of the grant of the patent: **13.12.2000**
(21) Application number: 97306873.7
(22) Date of filing: 04.09.1997
(51) Int. Cl.: B23Q 1/00, B23Q 1/72

(54) **Control box selectively engageable with tool carriage of CNC machine tool**
Mit dem Werkzeugschlitten einer Werkzeugmaschine wahlweise kuppelbare Kontrolleinheit
Boîtier de commande engageable sélectivement avec le chariot port-outil d'une machine outil

(30) Priority: 04.04.1997 BR 9700507
(43) Date of publication of application: 07.10.1998
(60) Divisional application: 00100628.7
(73) Proprietor: Industrias Romi S.A., 13453-900 Santa Barbara d'Oeste, Sao Paulo (BR)
(72) Inventor: Romi, José Carlos, 13453-900 - Santa Bárbara d'Oste - SP (BR)
(74) Representative: Needle, Jacqueline

(56) References cited:
- EP-A- 0 418 213
- DE-U- 8 129 032
- US-A- 3 198 078
- US-A- 4 706 415

## Description

The present invention relates to machine tools.

It is known to control machine tools, such as lathes, for example, by a computerised numerical control (CNC). In this respect, a CNC machine tool may be operated automatically, without interference from an operator, or, alternatively, the machine tool may be provided with a control device enabling control of elements of the machine tool by an operator. For example, an operator may perform manual turning operations on a workpiece held on a headstock chuck of a lathe.

In general, a lathe has at least two slidable carriages, acting mutually orthogonally, and conventionally the manually operable control device is fixed to the longitudinally movable carriage for control thereof and movement therewith (see e.g. EP 418 213 A). However, as this control device moves with the carriage, the speed of traverse of the carriage has to be limited to avoid the risk of injury arising if the control device were to collide with the operator's body. Indeed, in some countries the speed of movement of the longitudinally movable carriage is restricted to a few metres per minute to prevent any such accidents occurring. Obviously, production speeds are reduced where a reduction on carriage speed is enforced.

It is an object of the present invention to reduce the disadvantages of known machine tools.

According to the present invention there is provided a machine tool comprising a carriage movable longitudinally of the machine, and a control device enabling an operator to control movement of said carriage, characterized in that said machine tool has a fixed support on which the control device is supported for movement longitudinally of the machine tool, and in that said machine tool further comprises engaging means enabling the carriage and the control device to be selectively engaged for longitudinal movement in tandem and selectively disengaged.

In an embodiment of a machine tool of the invention, the carriage and the control device are engaged for control of said carriage by an operator. Preferably, said engaging means incorporates means for preventing rapid traverse of said carriage when said control device and said carriage are engaged. Thus, when the control device is moving with the carriage, the speed of movement of the carriage, and hence of the control device, is kept low.

However, when manual control of the carriage movement is not required, for example, when the machine tool is operated automatically, the carriage and the control device may be disengaged such that during the movement of the carriage there is no corresponding movement of the control device. In these circumstances, the carriage can be moved in safety at much more rapid speeds. In an embodiment, said rapid traverse preventing means comprises a switch actuable by engagement of said carriage and said control device.

In a preferred embodiment, a machine tool of the invention further comprises at least one movable cover to cover said carriage, wherein the or each cover is supported on said fixed support for movement longitudinally of said machine tool.

It is particularly convenient to support the or each movable cover on the fixed support provided for the control device.

The fixed support for supporting the control device may be configured as appropriate. In a preferred embodiment, said fixed support comprises a wall fixed with respect to a bed of the machine tool, and further comprises cooperating guide means supported on said control device and on said wall for enabling sliding movement of the control device longitudinally of the machine tool.

Clearly, the cooperating guide means may be arranged in any appropriate manner. For example, said cooperating guide means may comprise longitudinally extending guideways defined by or carried on one of said wall and said control device, and rollers carried on the other of said control device and said wall.

Where the or each movable cover is also supported for longitudinal movement on the fixed support it is convenient to provide further cooperating guide means supported on said movable cover and on said wall for enabling sliding movement of the or each cover longitudinally of the machine tool.

Preferably, said cooperating guide means comprise longitudinally extending guideways defined by or carried on one of said wall and said movable cover, and rollers carried on the other of said movable cover and said wall.

The movable cover or covers will generally enclose the moving parts of the machine tool, and in particular the carriage or carriages thereof. Preferably, one end of the or each movable cover will be supported for sliding movement on the fixed support, with the other end thereof similar supported for sliding movement on a housing of the machine tool.

In an embodiment, said engaging means enabling the carriage and the control device to be selectively engaged comprises at least one projection carried by one of the carriage and the control device, the or each projection being engageable in a corresponding recess in the other of the control device and carriage, and means to move the or each projection selectively into and out of engagement with the corresponding recess.

Preferably, said control device has a generally transversely movable rack in which at least one said recess of the engaging means is formed, movement of said rack moving the or each projection into or out of engagement with the recesses carried thereby.

Where the engaging means incorporates means for preventing rapid traverse of said carriage when said control device and said carriage are engaged, movement of said rack can be caused to actuate a switch. In one embodiment, the switch is a proximity switch which is actuated inductively.

In an embodiment, the machine tool is a CNC lathe having at least two carriages which are movable mutually orthogonally. The control device is arranged to actuate encoders for motors arranged to move the carriages. The control device may also enable actuation of a main electric motor.

Embodiments of the present invention will hereinafter be described, by way of example, with reference to the accompanying drawings in which:
Figure 1 shows a front elevation of a CNC lathe;
Figure 2 is a cross section of the lathe of Figure 1 taken along the line A-A;
Figure 3 shows an enlarged view of the marked area of Figure 2 illustrating the supporting structure for a control device;
Figures 4a and 4b illustrate engaging means for engaging the control device and a lathe carriage, the engaging means being shown in their engaged and disengaged positions;
Figure 5 shows a front elevation of the control device of the lathe of Figure 1;
Figure 6a shows a cross section of the control device taken along the line F-F of Figure 5;
Figure 6b shows a cross section of the control device taken along the line D-D of Figure 5;
Figures 6c and 6d show cross sections of the control device taken along the line C-C of Figure 5 showing the engaged and disengaged conditions; and
Figure 6e shows a section of the control device taken along the line B-B of Figure 5.

The present invention is specifically described herein with reference to a computerised numerical control (CNC) lathe. However, it will be apparent that this invention is equally applicable to machine tools in general.

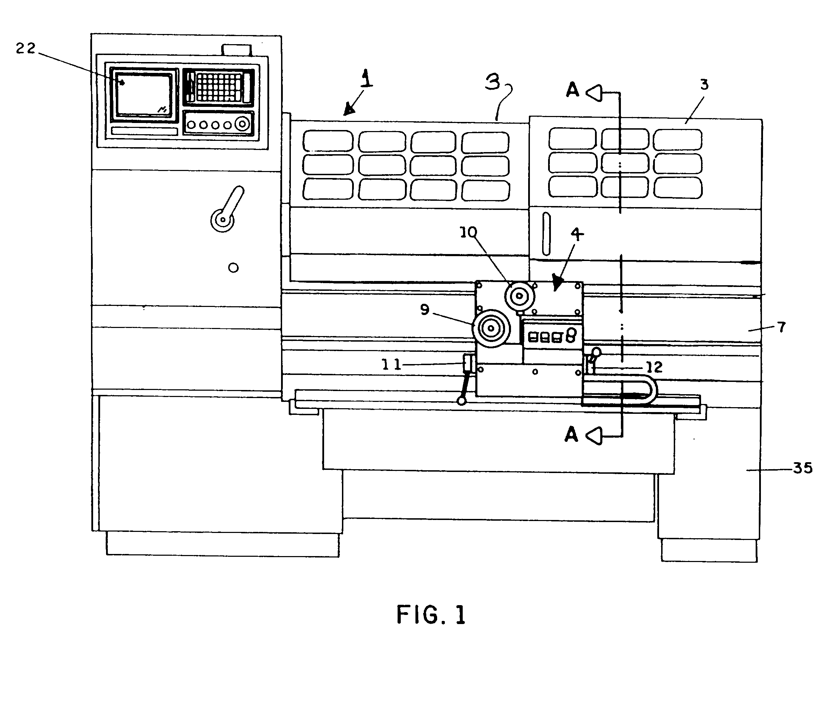

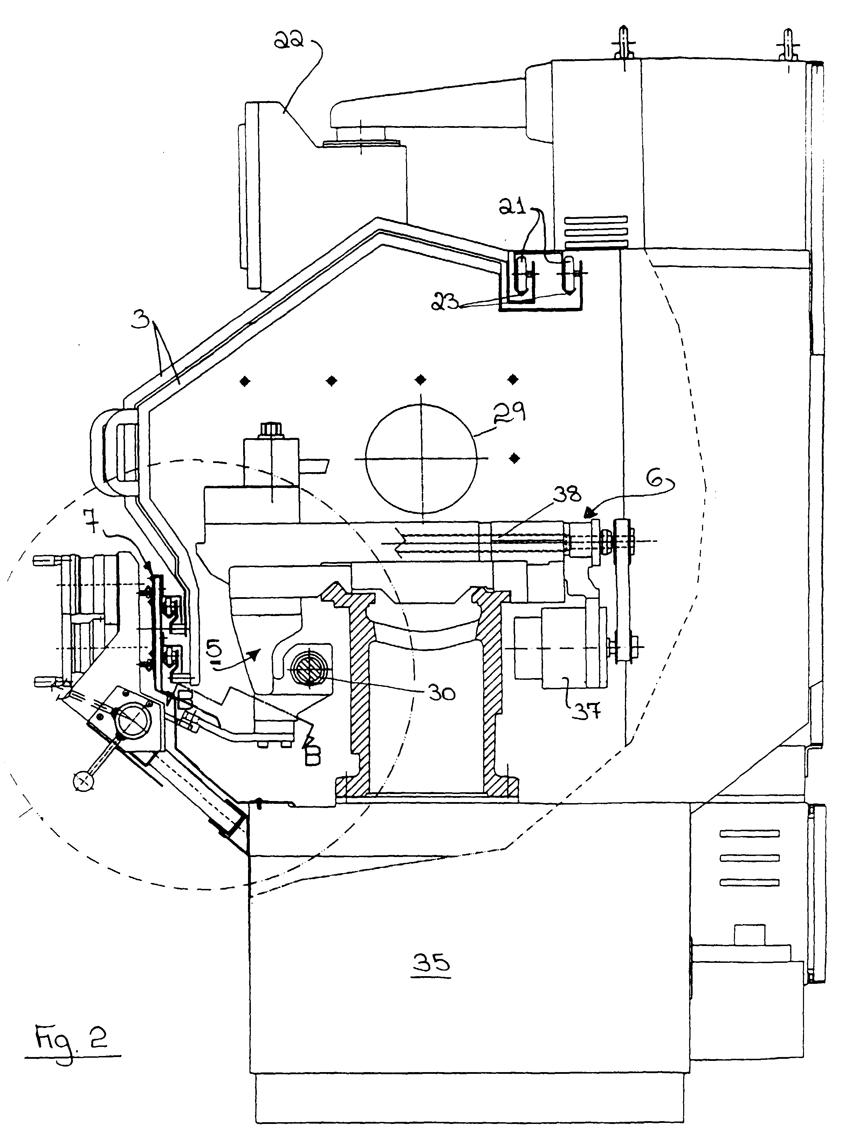

A front elevation of a CNC lathe 1 is shown in Figure 1 and a cross-section thereof taken on the line A-A is shown in Figure 2. It will be seen that the lathe 1 has a lathe bed 35 which supports two carriages 5 and 6 for movement in mutually orthogonal directions. The carriage 5 is movable longitudinally of the machine, whilst the upper carriage 6 is movable transversely thereto. Two movable covers 3 are provided to envelope the carriages 5, 6 and hence to protect an operator during operation of the machine. For automatic operation of the lathe 1 a CNC control unit 22 is provided. In known manner, the lathe 1 is also provided with a control device 4 enabling an operator to manually control the operation of the carriages 5, 6.

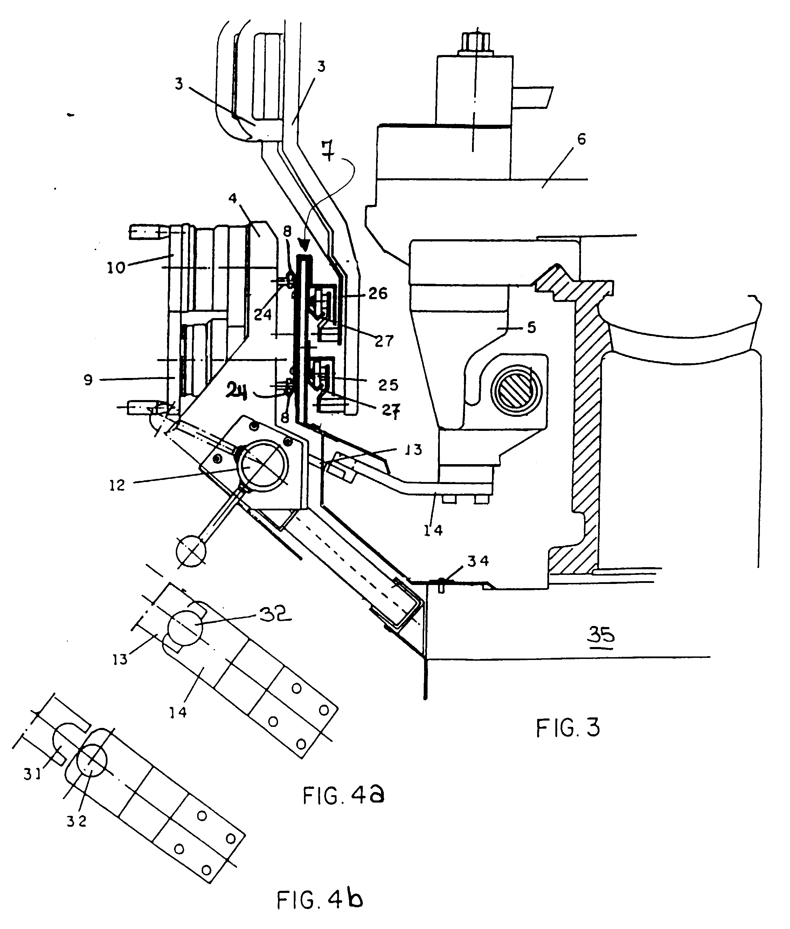

Both the control device 4, and the movable covers 3, are supported for sliding movement longitudinally of the machine tool by a fixed support 7. This fixed support 7 is a generally upstanding metal wall which is fixed by screws 34 to the lathe bed 35. As can be seen most clearly in Figure 3, the support 7 carries guideways 8 on its outwardly facing surface, which guideways extend longitudinally of the machine. Rollers or wheels 24 carried by the control device 4 are received within the guideways 8 whereby longitudinal sliding movement of the control device 4 is enabled. Similarly, on its inwardly facing surface the wall 7 carries vertically spaced guideways 27. One end of a first movable cover 3 is provided with rollers 26 engageable within the upper guideway 27, whereas one end of the second movable cover 3 has rollers 25 engageable in the lower guideway 27.

As is apparent from Figure 2, the other end of each of the movable covers 3 is similarly supported by way of cooperating guide means comprising guideways generally indicated at 23 provided by the machine tool housing and rollers 21 carried by the covers 3. The rollers 21 engage in the guideways 23 whereby the cooperating guide means provide for sliding movement of the two covers 3. It will be appreciated that the two covers 3 may be slid longitudinally of the machine to reveal or enclose the carriages 5 and 6 as is required.

The structure of the lathe 1, and its drive means, may be conventional and does not form part of the present invention. As is conventional, the lathe 1 has a main motor (not shown) for driving the lathe headstock. An headstock chuck is indicated at 29 in Figure 2. In addition, Figure 2 shows an electric motor 37 and a cooperating ball screw 38 which drive the transversely movable carriage 6. Similarly, a ball screw 30, actuated by an electric motor (not visible), drives the longitudinally movable carriage 5.

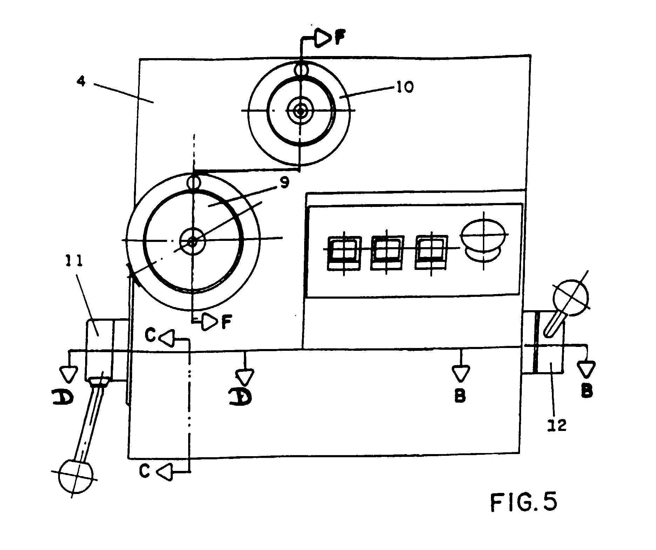

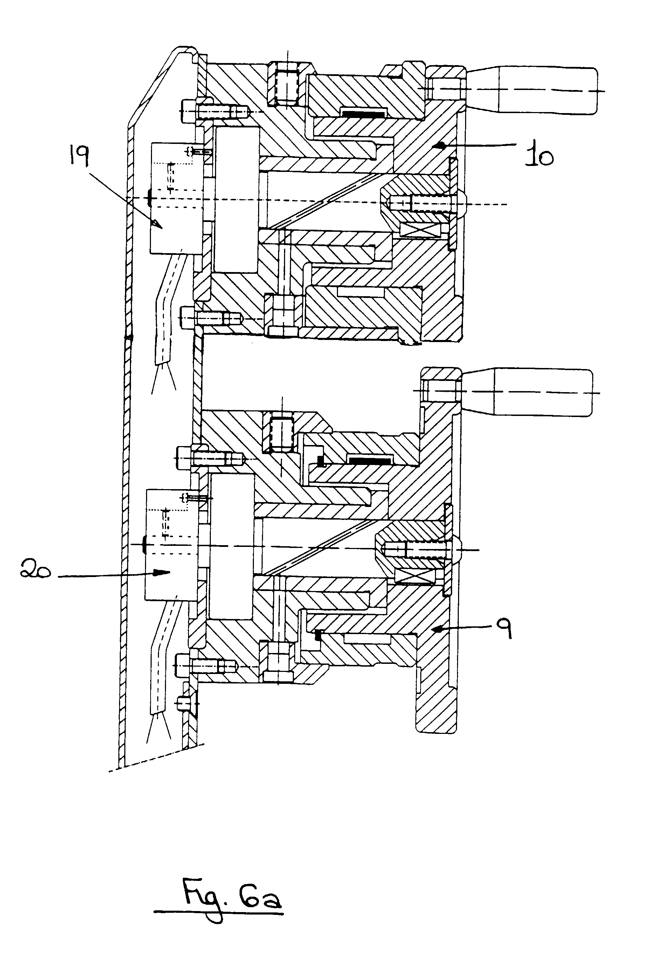

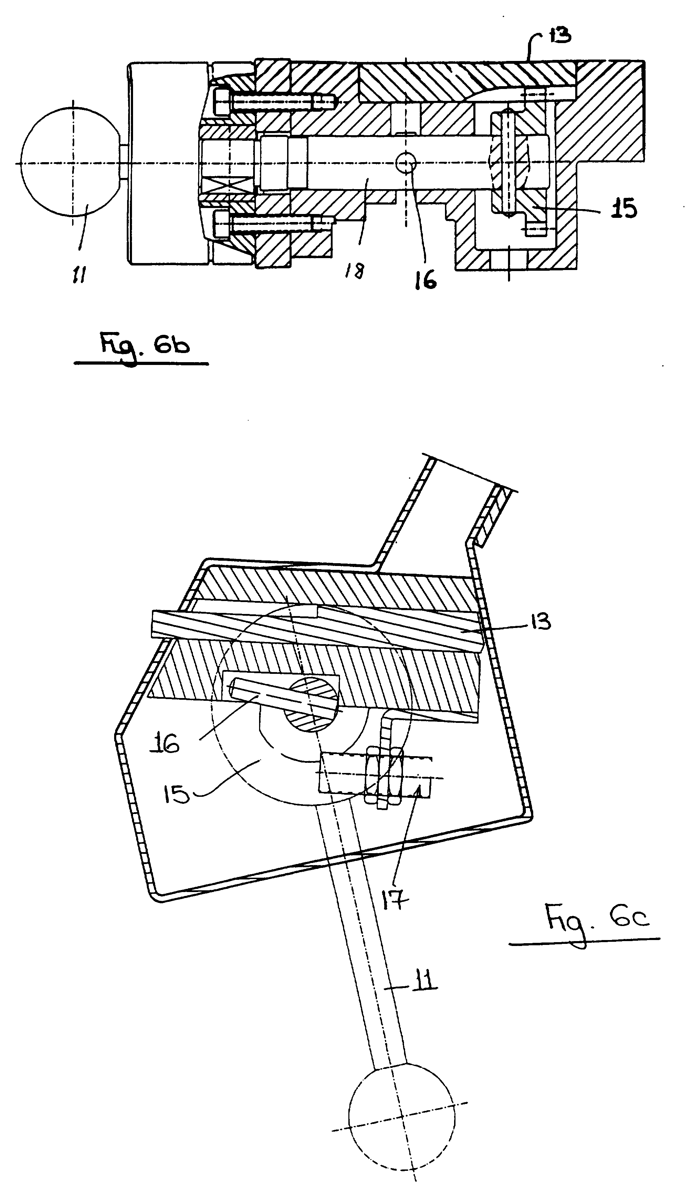

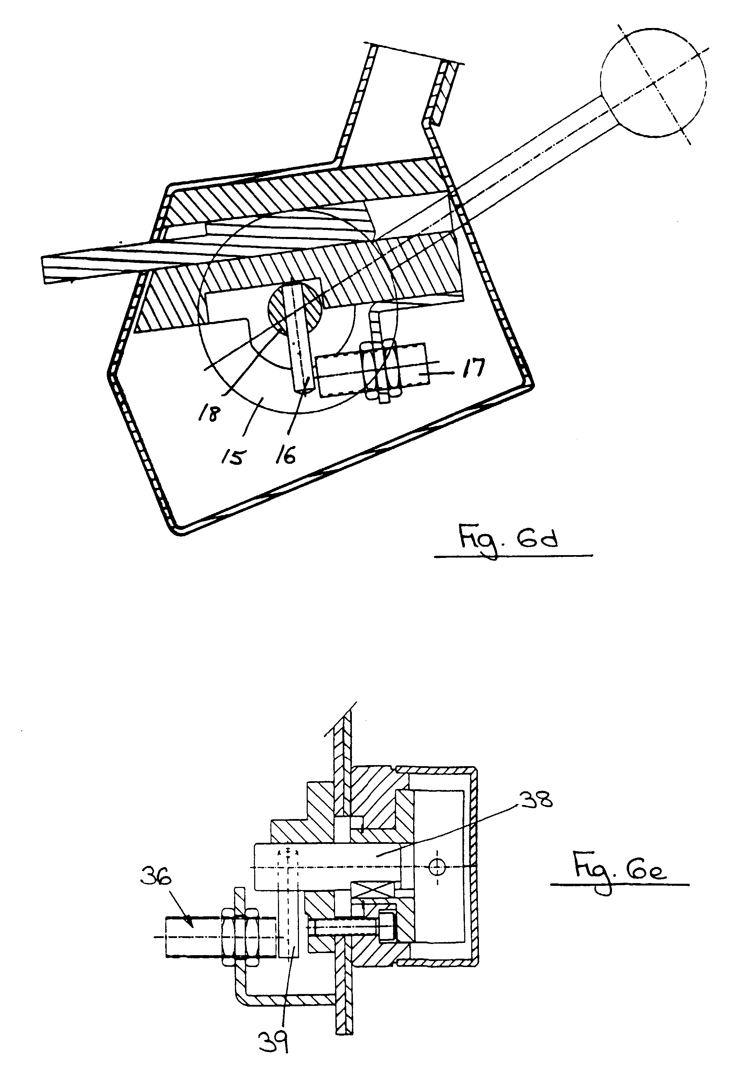

Figure 5 shows a front elevation of the control device 4 whilst Figure 6a shows a section along line F-F thereof. As is apparent, the control device 4 comprises two control handwheels 10 and 9. The control handwheel 10 is arranged such that rotation thereof will move the upper, transversely movable carriage 6. In this respect, the rotation of the handwheel 10 rotates an encoder 19 which causes corresponding rotation of the motor 37 whereby the carriage 6 is moved. Similarly, rotation of the control handwheel 9 causes rotation of a corresponding encoder 20 which actuates the electric motor causing longitudinal movement of the carriage 5.

When the carriages 5 and 6 are being moved manually by the operator by way of the control device it is required that the control device 4 move with the carriage 5, for example, to enable position information to be displayed by the control device 4 in known manner. Accordingly, engaging means 13, 31, 32 and 14 are arranged to be selectively actuable by a lever 11 to engage the control device 4 and the carriage 5 for longitudinal movement in tandem.

Figure 6b shows a section of the control device 4, taken along the line D-D of Figure 5. It will be seen that rotation of the lever 11 is arranged to rotate a longitudinally extending shaft 18 and hence to rotate a gear 15 carried on the shaft 18. The gear 15 engages with a transversely extending rack 13. It will be immediately apparent, therefore, that rotation of the lever 11, and hence of the shaft 18, moves the rack 13 generally transversely towards or away from the carriage 5.

As can be seen in Figure 3, the carriage 5 has an arm 14 fixed thereto to extend transversely. At its end the arm 14 carries a depending pin 32. At its end, the rack 13 has a corresponding recess 31. As is clear from Figures 4a and 4b, when the rack 13 is moved by the lever 11 to the engagement position, the pin 32 is received within the recess 31 as shown in Figure 4a. In this case, the carriage 5 and the control device 4 are coupled for longitudinal movement in tandem. If the lever 11 is then returned to its original position, the rack 13 is retracted, and the carriage 5 and the control device 4 are disengaged as indicated in Figure 4b.

When the carriage 5 and the control device 4 are engaged for longitudinal movement in tandem, it is required to inhibit the speed of movement thereof for safety reasons. In this respect, and as is clearly shown in Figures 6c and 6d, the shaft 18 carries a pin 16 which is arranged to inductively activate a proximity switch 17. Actuation of the proximity switch 17 operates inhibiting means (not shown) which prevent rapid traverse of both carriages 5 and 6. Figure 6c shows the condition of the rack 13 in its withdrawn, disengaged position in which the proximity switch 17 is not actuated, whereas Figure 6d shows the situation when the rack 13 is extended to engage the carriage arm 14 and the proximity switch 17 is actuated.

Whilst in the embodiment illustrated inductive operation of the switch 17 is provided, it will be appreciated that, alternatively, mechanically operated switches may be used.

Thus, and as is required, upon engagement of the carriage 5 and the control device 4 for longitudinal movement in tandem, inhibiting means are operated to prevent rapid traverse of the carriages 5 and 6. However, when the carriage 5 and the control device 4 are uncoupled, whereby automatic operation under the control of the CNC unit 22 is enabled, there is no inhibition on the speed of the carriages. However, there is no increased risk to safety in this mode, as, although the control device 4 is external to the covers 3, in the uncoupled condition there is no movement thereof. All of the rapidly moving parts, during automatic operation, namely the carriages 5 and 6, will be within the covers 3 in known manner.

The ability to couple and decouple the control device 4 and the carriage 5 gives to the operator a choice of relative positions between the two. Thus, the machine operator can choose to couple the control device 4 to the carriage 5 at any position along the working travel of the carriage 5 to suit the operator's requirements.

The control device 4 has, as is apparent in Figure 5, a second control lever 12. This is used, during manual operation of the machine tool, to run the main electric motor and to select the direction of rotation of the headstock chuck 29. In this respect, and is apparent in Figure 6e, rotation of the lever 12 rotates an inductive pin 39 carried on a shaft 38 coupled to the lever 12 whereby a proximity switch 36 controlling the operation of the main motor is operated.

It will be appreciated that variations in and modifications to the embodiments described and illustrated may be made within the scope of the appended claims.

## Claims

1. A machine tool comprising a carriage (5) movable longitudinally of the machine, and a control device (4) enabling an operator to control movement of said carriage, characterized in that said machine tool has a fixed support (7) on which the control device is supported for movement longitudinally of the machine tool, and in that said machine tool further comprises engaging means (13,14) enabling the carriage and the control device to be selectively engaged for longitudinal movement in tandem and selectively disengaged.

2. A machine tool as claimed in Claim 1, wherein said engaging means incorporates means (17) for preventing rapid traverse of said carriage (5) when said control device (4) and said carriage are engaged.

3. A machine tool as claimed in Claim 2, wherein said rapid traverse preventing means comprises a switch (17) actuable by engagement of said carriage (5) and said control device (4).

4. A machine tool as claimed in any preceding claim, further comprising at least one movable cover (3) to cover said carriage (5), wherein the or each cover is supported on said fixed support (7) for movement longitudinally of said machine tool.

5. A machine tool as claimed in any preceding claim, wherein said fixed support (7) comprises a wall fixed with respect to a bed (35) of the machine tool, and further comprising cooperating guide means (8,24) supported on said control device (4) and on said wall (7) for enabling sliding movement of the control device longitudinally of the machine tool.

6. A machine tool as claimed in Claim 5, wherein said cooperating guide means comprise longitudinally extending guideways (8) defined by or carried on one of said wall (7) and said control device (4), and rollers (24) carried on the other of said control device and said wall.

7. A machine tool as claimed in any preceding claim, wherein said engaging means enabling the carriage and the control device to be selectively engaged comprises at least one projection (32) carried by one of the carriage (5) and the control device (4), the or each projection being engageable in a corresponding recess (31) in the other of the control device and carriage, and means (13) to move the or each projection selectively into and out of engagement with the corresponding recess.

8. A machine tool as claimed in Claim 7, wherein said control device (4) has a generally transversely movable rack (13) in which at least one said recess (31) of the engaging means is formed, movement of said rack moving the or each projection (32) into or out of engagement with the recesses carried thereby.

## Patentansprüche

1. Werkzeugmaschine mit einem Schlitten (5), welcher in Längsrichtung der Maschine bewegbar ist, und einer Steuervorrichtung (4), mittels welcher ein Bediener die Bewegung des Schlittens steuern kann, dadurch gekennzeichnet, daß die Werkzeugmaschine eine feste Lagerung (7) hat, an welcher die Steuervorrichtung für eine Bewegung in Längsrichtung der Werkzeugmaschine gestützt ist, und daß die Werkzeugmaschine weiterhin eine Eingriffseinrichtung (13,14) aufweist, welche es ermöglicht, daß der Schlitten und die Steuervorrichtung selektiv für eine gemeinsame Bewegung in Längsrichtung in Eingriff gebracht und selektiv gelöst werden können.

2. Werkzeugmaschine nach Anspruch 1, wobei die Eingriffseinrichtung eine Einrichtung (17) aufweist, um ein schnelles Verfahren des Schlittens (5) zu verhindern, wenn die Steuervorrichtung (4) und der Schlitten ineinander eingreifen.

3. Werkzeugmaschine nach Anspruch 2, wobei die ein schnelles Verfahren verhindernde Einrichtung einen Schalter (17) aufweist, welcher durch Eingriff des Schlittens (5) und der Steuervorrichtung (4) betätigt werden kann.

4. Werkzeugmaschine nach einem der vorhergehenden Ansprüche, welche weiterhin mindestens eine bewegliche Abdeckung (3) zum Abdecken des Schlittens (5) aufweist, wobei die oder jede Abdeckung an der feststehenden Lagerung (7) für eine Bewegung in Längsrichtung der Werkzeugmaschine gestützt ist.

5. Werkzeugmaschine nach einem der vorhergehenden Ansprüche, wobei die feststehende Lagerung (7) eine Wand aufweist, die in bezug auf ein Bett (35) der Werkzeugmaschine fixiert ist, und weiterhin eine zusammenwirkende Führungseinrichtung (8,24) aufweist, welche an der Steuervorrichtung (4) und an der Wand (7) gelagert ist, um eine Gleitbewegung der Steuervorrichtung in Längsrichtung der Werkzeugmaschine zu ermöglichen.

6. Werkzeugmaschine nach Anspruch 5, wobei die zusammenwirkende Führungseinrichtung eine sich in Längsrichtung erstreckende Führungsbahn (8), welche definiert oder durch die Wand (F) oder die Steuervorrichtung (4) getragen ist, und Rollen (24) aufweist, welche an der jeweils anderen der Steuervorrichtung bzw. der Wand getragen sind.

7. Werkzeugmaschine nach einem der vorhergehenden Ansprüche, wobei die Eingriffseinrichtung, die ermöglicht, daß der Schlitten und die Steuervorrichtung selektiv ineinander eingreifen, mindestens einen Vorsprung (32) aufweist, welcher von dem Schlitten (5) oder der Steuervorrichtung (4) getragen ist, wobei der oder jeder Vorsprung in eine entsprechende Aussparung (31) in den jeweils anderen Teil von Steuervorrichtung oder Schlitten eingreifen kann, und eine Einrichtung (13) zum Bewegen des oder jedes Vorsprungs selektiv in und außer Eingriff mit der entsprechenden Aussparung.

8. Werkzeugmaschine nach Anspruch 7, wobei die Steuervorrichtung (4) ein im wesentlichen transversal bewegbares Gestell (13) aufweist, in welchem mindestens eine Aussparung (31) der Eingriffseinrichtung gebildet ist, wobei die Bewegung des Gestells den oder jeden Vorsprung (32) in oder außer Eingriff mit den durch dieses getragenen Aussparungen bewegt.

## Revendications

1. Machine-outil comprenant un chariot (5) mobile longitudinalement à la machine, et un dispositif (4) de commande permettant à un opérateur de commander le déplacement dudit chariot, caractérisée en ce que ladite machine-outil comporte un support fixe (7) sur lequel est supporté le dispositif de commande pour déplacement longitudinalement à la machine-outil, et en ce que ladite machine-outil comprend en outre un moyen (13, 14) d'engagement permettant d'engager sélectivement le chariot et le dispositif de commande pour déplacement longitudinal en tandem et de les dégager sélectivement.

2. Machine-outil selon la revendication 1, dans laquelle ledit moyen d'engagement incorpore un moyen (17) servant à empêcher une traversée rapide dudit chariot (5) lorsque ledit dispositif (4) de commande et ledit chariot sont engagés.

3. Machine-outil selon la revendication 2, dans laquelle ledit moyen empêchant une traversée rapide comprend un commutateur (17) pouvant être actionné par engagement dudit chariot (5) et dudit dispositif (4) de commande.

4. Machine-outil selon l'une quelconque des revendications précédentes, comprenant en outre au moins un carter mobile (3) pour couvrir ledit chariot (5), dans laquelle le, ou chaque, carter est supporté sur ledit support fixe (7) pour déplacement longitudinalement à ladite machine-outil.

5. Machine-outil selon l'une quelconque des revendications précédentes, dans laquelle ledit support fixe (7) comprend une paroi fixe par rapport à un lit (35) de la machine-outil, et comprenant en outre un moyen (8, 24) formant guide de coopération supporté sur ledit dispositif (4) de commande et sur ladite paroi (7) pour permettre un déplacement coulissant du dispositif de commande longitudinalement à la machine-outil.

6. Machine-outil selon la revendication 5, dans laquelle ledit moyen formant guide de coopération comprend des glissières s'étendant longitudinalement (8) définies par, ou portées sur, l'un de ladite paroi (7) et dudit dispositif (4) de commande et des galets (24) portés sur l'autre dudit dispositif de commande et de ladite paroi.

7. Machine-outil selon l'une quelconque des revendications précédentes, dans laquelle ledit moyen d'engagement qui permet d'engager sélectivement le chariot et le dispositif de commande comprend au moins une saillie (32) portée par l'un du chariot (5) et du dispositif (4) de commande, la, ou chaque, saillie pouvant être engagée dans un évidement correspondant (31) situé dans l'autre du dispositif de commande et du chariot, et un moyen (13) pour déplacer la, ou chaque, saillie sélectivement en et hors de coopération avec l'évidement correspondant.

8. Machine-outil selon la revendication 7, dans laquelle ledit dispositif (4) de commande comporte une crémaillère mobile globalement transversalement (13), dans laquelle est formé au moins l'un desdits évidements (31) du moyen d'engagement, le déplacement de ladite crémaillère déplaçant la, ou chaque, saillie (32) en, ou hors de, coopération avec les évidements ainsi portés.
